**Europäisches Patentamt**

(19) **European Patent Office**

**Office européen des brevets**

(11) Veröffentlichungsnummer: **0 170 647**
**B1**

(12) **EUROPÄISCHE PATENTSCHRIFT**

(45) Veröffentlichungstag der Patentschrift:
16.03.88

(51) Int. Cl.⁴: **B 62 D 11/18**

(21) Anmeldenummer: **85890166.3**

(22) Anmeldetag: **25.07.85**

(54) Antriebs- und Lenkeinrichtung, insbesondere für Gleiskettenfahrzeuge.

(30) Priorität: **30.07.84 AT 2455/84**

(43) Veröffentlichungstag der Anmeldung:
**05.02.86 Patentblatt 86/6**

(45) Bekanntmachung des Hinweises auf die Patenterteilung:
**16.03.88 Patentblatt 88/11**

(84) Benannte Vertragsstaaten:
**DE FR GB IT SE**

(56) Entgegenhaltungen:
**DE-C-977 982**
**GB-A-803 713**
**US-A-2 946 239**

**INGENIEURS L'AUTOMOBILE, Band 1, Nr. 1, Januar 1979, Seiten 28-35; M.P. LEBOIME: "Techniques des transmissions des véhicules chenillés rapides"**

(73) Patentinhaber: **Steyr- Daimler- Puch Aktiengesellschaft, Kärntnerring 7, A-1010 Wien (AT)**

(72) Erfinder: **Lenhard- Backhaus, Hugo, Dipl.- Ing., Herzog Ernst Gasse 11, A-8600 Bruck/Mur (AT)**

EP 0 170 647 B1

## Beschreibung

Die Erfindung bezieht sich auf eine Antriebs- und Lenkeinrichtung, insbesondere für Gleiskettenfahrzeuge, bestehend aus einem gegenüber der Längsmittelebene des Fahrzeuges seitlich versetzten Antriebsmotor mit zu dieser Ebene paralleler Welle, aus einem Schaltgetriebe, das über einen gemeinsamen, aus Winkeltrieb und Gelenkwelle gebildeten Antriebsstrang mit zwei je einem Treibrad zugeordneten Stirnrad-Planetengetrieben verbunden ist, und aus einem ebenfalls vom Antriebsmotor her angetriebenen, steuerbaren hydrostatischen Getriebe, das je ein Glied der beiden Stirnrad-Planetengetriebe in entgegengesetzter Drehrichtung antreibt.

Eine derartige Einrichtung ist aus der Praxis bereits bekannt. Dabei liegt aber das Schaltgetriebe seitlich neben dem Antriebsmotor und wird von der den Treibrädern abgekehrten Stirnseite des Motors her über mehrere Stirnräder angetrieben. Von der Ausgangswelle dieses Schaltgetriebes geht dann der Antriebsstrang etwa parallel zur Motorwelle zu den beiden Stirnrad-Planetengetrieben, wobei der Winkeltrieb diesen Planetengetrieben unmittelbar vorgeordnet und mit dem Schaltgetriebe über die Gelenkwelle verbunden ist. Die Pumpe des hydrostatischen Getriebes wird vom Antriebsmotor, und zwar von seiner den Treibrädern zugekehrten Stirnseite her, ebenfalls über eine Gelenkwelle und ein Zwischengetriebe angetrieben, wobei das steuerbare, hydrostatische Getriebe, das auf je ein Glied der Stirnrad-Planetengetriebe in entgegengesetzter Drehrichtung einwirkt, zur Fahrzeuglenkung dient, da die beiden Treibräder zufolge der entgegengesetzten Drehrichtung des Antriebes der einen Glieder der Planetengetriebe, deren andere Glieder vom Antriebsmotor her über den Antriebsstrang mit gleicher Drehrichtung angetrieben werden, verschiedene Drehzahlen aufweisen, so daß die Kette an der einen Fahrzeugseite gegenüber der Kette an der anderen Fahrzeugseite voreilt oder zurückbleibt.

Bei der bekannten Bauart, bei der das Schaltgetriebe seitlich neben dem Antriebsmotor liegt und mit diesem über Stirnräder verbunden ist, ergibt sich eine etwa U-förmige Einheit, deren Lagerung Schwierigkeiten bereitet und die eine statisch ungünstige Ausbildung aufweist, so daß eine schwere und verhältnismäßig starre Konstruktion erforderlich ist. Die Stirnräder zur Kraftübertragung vom Motor auf das Schaltgetriebe erhöhen weiterhin den erforderlichen technischen Aufwand, wozu auch die Gelenkwelle und das Zwischengetriebe für die Pumpe des hydrostatischen Getriebes beitragen, zumal diese Pumpe eine vergleichsweise hohe Antriebsleistung benötigt. Die Mehrzahl der Zwischenräder verschlechtern selbstverständlich den Wirkungsgrad der gesamten Einrichtung und verursachen eine erhöhte Schmierölerwärmung, was einen größeren oder zusätzlichen Ölkühler erforderlich macht. Schließlich besteht ein weiterer Nachteil darin, daß die Gelenkwelle des Antriebsstranges sich mit ihren An- bzw. Abtriebswellen meist nicht in Strecklage befindet, sondern mehr oder weniger große Gelenkwinkel bildet, was zu Querkräften führt, die von der Aufhängung bzw. Abstützung des Motorgetriebeaggregates aufgenommen werden müssen.

Demnach liegt der Erfindung die Aufgabe zugrunde, diese Mängel zu beseitigen und eine Antriebs- und Lenkeinrichtung der eingangs geschilderten Art zu schaffen, die einen geringern technischen Aufwand erfordert, eine Erhöhung des Wirkungsgrades bei der Drehmomentübertragung ermöglicht und einen Raumgewinn erzielen läßt.

Die Erfindung löst die gestellte Aufgabe dadurch, daß der Antriebsmotor, das Schaltgetriebe und der Winkeltrieb des Antriebsstranges in Längsrichtung der Motorwelle unmittelbar aneinander anschließen, daß die quer zu dieser Richtung verlaufende Gelenkwelle des Antriebsstranges von einer Hohlwelle umschlossen und rückführend mit ihr verbunden ist, daß die Hohlwelle zwei mit je einem Glied der beiden Stirnrad-Planetengetriebe kämmende Zahnkränze trägt und daß die Pumpe des hydrostatischen Getriebes unmittelbar von einer Nebenwelle des Schaltgetriebes angetrieben ist.

Da also der Antriebsmotor, das Schaltgetriebe und der Winkeltrieb des Antriebsstranges unmittelbar aneinander anschließen, erübrigen sich die Stirnräder zur Drehmomentübertragung von der Motorwelle auf die Eingangswelle des Schaltgetriebes, was nicht nur zu einer Verringerung des technischen Aufwandes führt, sondern auch einen verbesserten Wirkungsgrad mit sich bringt, was auch für den Fortfall des bisherigen Zwischengetriebes zum Antrieb der Pumpe des hydrostatischen Getriebes gilt, da letztere unmittelbar an das Schaltgetriebe angeschlossen ist. Für den Pumpenantrieb erübrigt sich demnach auch die bisherige Gelenkwelle. Durch die Anordnung des Schaltgetriebes im stirnseitigen Anschluß an den Antriebsmotor wird neben diesem der gewünschte Raumgewinn erreicht, und es ergibt sich überdies eine statisch günstige Bauform des Motorgetriebeaggregates, das somit leichter ausgeführt werden kann. Obwohl der Winkeltrieb des Antriebsstranges bei der erfindungsgemäßen Anordnung nahe an die Stirnrad-Planetengetriebe herangerückt ist, kann die wegen der voneinander unabhängigen elastischen Aufhängung des Motorgetriebeaggregates einerseits und der übrigen Antriebseinheiten andererseits erforderliche Gelenkwelle eine genügende Länge erhalten, weil sie quer zur Längsrichtung der Motorwelle verläuft und innerhalb der Hohlwelle angeordnet ist. Eine derartige Anordnung der Gelenkwelle bringt auch eine günstige Einleitung von Querkräften auf das Motorgetriebeaggregat mit sich, wodurch die Anforderungen an dessen elastische Abstützung weiterhin herabgesetzt werden. Der bei vielen Fahrzeugen mit mittig angeordnetem Antriebsmotor übliche, unmittelbar stirnseitige Anschluß des Schaltgetriebes gibt selbstverständlich auch die Möglichkeit, ein automatisches Getriebe zu verwenden, das bei der bisherigen Anordnung des Getriebes neben dem Motor aus Platzmangel nicht verwendet werden konnte.

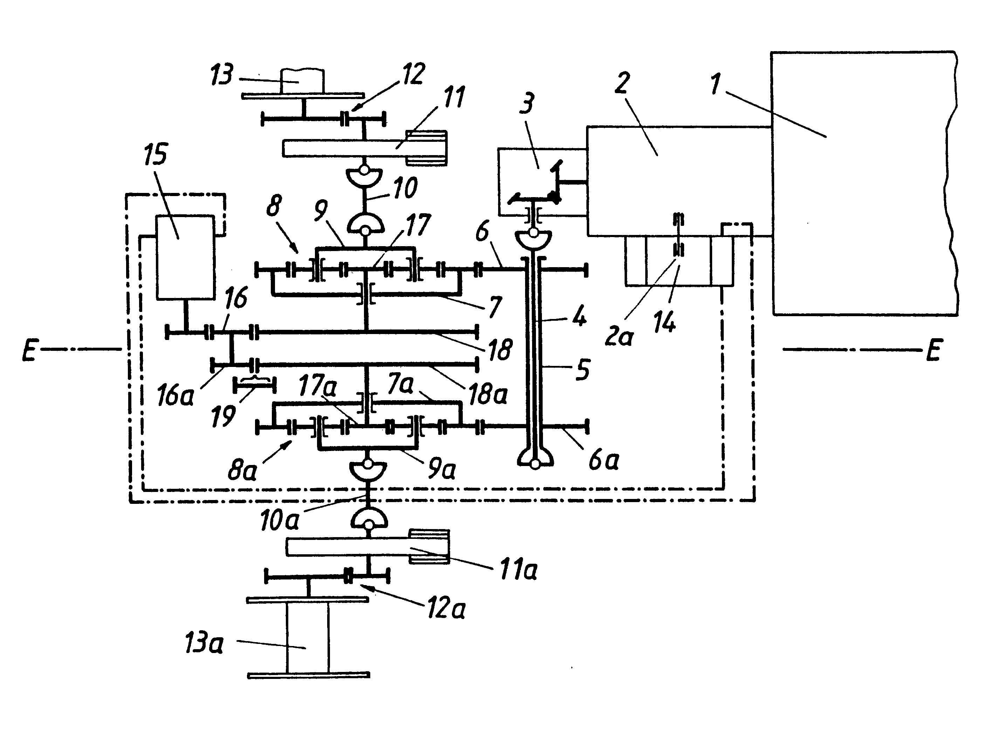

Die Zeichnung zeigt als Ausführungsbeispiel eine Antriebs- und Lenkeinrichtung eines Gleiskettenfahrzeuges im Schema.

Der Antriebsmotor 1 ist gegenüber der Längsmittelebene E des Fahrzeuges seitlich versetzt, wobei die Motorwelle parallel zu dieser Ebene E verläuft. An den Antriebsmotor 1 schließt stirnseitig unmittelbar das Schaltgetriebe 2 und an dieses ein Winkeltrieb 3 an, der zusammen mit einer Gelenkwelle 4 den Antriebsstrang bildet. Es ist ersichtlich, daß die Gelenkwelle 4 des Antriebsstranges 3, 4 quer zur Längsrichtung der Motorwelle bzw. der Längsmittelebene E des Fahrzeuges angeordnet und von einer Hohlwelle 5 umschlossen und rückführend mit dieser verbunden ist. Die Hohlwelle 5 trägt zwei Zahnkränze 6, 6a. Diese Zahnkränze 6, 6a kämmen mit dem Außen- bzw. Hohlrad 7, 7a je eines insgesamt mit 8, 8a bezeichneten Stirnrad-Planetengetriebes. Vom Planetenradträger 9, 9a dieser Stirnrad-Planetengetriebe 8, 8a erfolgt der Abtrieb über eine Gelenkwelle 10, 10a, eine Bremsscheibe 11, 11a und eine Stirnradübersetzung 12, 12a zu den Treibrädern 13, 13a der Gleisketten des Fahrzeuges.

Zur Lenkung, d.h. zur jeweiligen Verzögerung des einen und Beschleunigung des anderen der beiden Treibräder 13, 13a dient ein steuerbares, hydrostatisches Getriebe, das aus einer unmittelbar von einer Nebenwelle 2a des Schaltgetriebes 2 angetriebenen Pumpe 14 und einem Motor 15 besteht. Vom Motor 15 des hydrostatischen Getriebes 14, 15 wird ein Zahnradpaar 16, 16a angetrieben, wobei das Zahnrad 16 unmittelbar mit einem mit dem Sonnenrad 17 des Stirnrad-Planetengetriebes 8 drehfest verbundenen Stirnrad 18 kämmt, wogegen zwischen dem anderen Zahnrad 16a und dem mit dem Sonnenrad 17a des Stirnrad-Planetengetriebes 8a in drehfester Verbindung stehenden Stirnrad 18a ein umkehrrad 19 vorgesehen ist, so daß die von den Sonnenrädern 17, 17a gebildeten Glieder der beiden Stirnrad-Planetengetriebe 8, 8a vom Motor 15 in entgegengesetzter Drehrichtung angetrieben werden.

## Patentanspruch

Antriebs- und Lenkeinrichtung, insbesondere für Gleiskettenfahrzeuge, bestehend aus einem gegenüber der Längsmittelebene (E) des Fahrzeuges seitlich versetzten Antriebsmotor (1) mit zu dieser Ebene paralleler Welle, aus einem Schaltgetriebe (2), das über einen gemeinsamen, aus Winkeltrieb (3) und Gelenkwelle (4) gebildeten Antriebsstrang mit zwei je einem Treibrad (13, 13a) zugeordneten Stirnrad-Planetengetrieben (8, 8a) verbunden ist, und aus einem ebenfalls vom Antriebsmotor (1) her angetriebenen, steuerbaren hydrostatischen Getriebe (14, 15), das je ein Glied der beiden Stirnrad-Planetengetriebe (8, 8a) in entgegengesetzter Drehrichtung antreibt, dadurch gekennzeichnet, daß der Antriebsmotor (1), das Schaltgetriebe (2) und der Winkeltrieb (3) des Antriebsstranges (3, 4) in Längsrichtung der Motorwelle unmittelbar aneinander anschließen, daß die quer zu dieser Richtung verlaufende Gelenkwelle (4) des Antriebsstranges (3, 4) von einer Hohlwelle (5) umschlossen und ruckfuhrend mit ihr verbunden ist, daß die Hohlwelle (5) zwei mit je einem Glied (7, 7a) der beiden Stirnrad-Planetengetriebe (8, 8a) kämmende Zahnkränze (6a, 6a) trägt und daß die Pumpe (14) des hydrostatischen Getriebes (14, 15) unmittelbar von einer Nebenwelle (2a) des Schaltgetriebes (2) angetrieben ist.

## Claim

A driving and steering device, particularly for tracked vehicles, comprising a driving engine (1) offset laterally relative to the longitudinal central plane (E) of the vehicle and having a shaft parallel to the plane, a gear-shift mechanism (2) connected via a common drive transmission made up of an angular drive (3) and drive shaft (4) to two spur-wheel planetary gears (8, 8a) each associated with a driving wheel (13, 13a), and a controllable hydrostatic transmission (14, 15) also driven by the engine (1) and driving a member of each of the two spur-wheel planetary gears (8, 8a) in opposite directions of rotation, characterised in that the driving engine (1), the gear-shift mechanism (2) and the angular drive (3) of the drive transmission (3, 4) are directly adjacent one another in the longitudinal direction of the engine shaft, the drive shaft (4) of the drive train (3, 4) extending transversely to the said direction is surrounded by a hollow shaft (5) and is connected therewith to form a reverse connection, the hollow shaft (5) has two toothed wheels (6a, 6a) each meshing with a member (7, 7a) of the two spur-wheel planetary gears (8, 8a), and the pump (14) of the hydrostatic transmission (14, 15) is directly driven by an auxiliary shaft (2a) of the gear-shift mechanism (2).

## Revendication

Dispositif moteur et directeur, en particulier pour véhicules à chenilles constitué par un moteur d'entraînement (1) en déport latéral par rapport au plan médian longitudinal (E) du véhicule, avec un arbre parallèle à ce plan, par une boîte de vitesse (2) accouplée au moyen d'une ligne de transmission commune formée d'un renvoi d'angle (3) et d'un arbre articulé (4), a chacun de deux trains planétaires d'engrenages (8, 8a) pour une roue motrice (13, 13a), par une transmission hydraulique gouvernable (14, 15) également entraînée par le moteur d'entraînement (1) qui entraîne en rotation inverse un élément de chacun des deux trains d'engrenages planétaires (8, 8a) caractérisé en ce qve le moteur d'entraînement (1), la boîte de vitesse (2) et le renvoi d'angle (3) de la ligne d'entraînement (3, 4) sont accouplés directement les uns aux autres dans la direction longitudinale de l'arbre du moteur, en ce que l'arbre articulé (4) de la ligne de transmission (3, 4) s'etendant transversalement à cette direction est accouplé à un arbre creux (5) qu'il entoure en faisant retour sur lui, en ce que l'arbre creux (5) porte deux pignons (6, 6a) en prise avec un élément (7, 7a) de chacun des trains d'engrenages planétaires (8, 8a) et en ce que la pompe (14) de la transmission hydraulique (14, 15) est entraînée directement par un arbre secondaire (2a) de la boîte de vitesse (2).